# EUROPÄISCHE PATENTSCHRIFT

(11) **EP 2 708 391 B1**
(45) Veröffentlichungstag und Bekanntmachung des Hinweises auf die Patenterteilung: **10.01.2018**
(21) Anmeldenummer: 13001934.2
(22) Anmeldetag: 13.04.2013
(51) Int. Cl.: B60H 1/00

(54) **GEHÄUSE FÜR EINE HEIZUNGS- UND/ODER KLIMAANLAGE INSBESONDERE FÜR FAHRZEUGE**
HOUSING FOR AN AIR CONDITIONER, IN PARTICULAR FOR A VEHICLE.
BOITIER DE CLIMATISATION NOTAMMENT DE VEHICULE AUTOMOBILE

(30) Priorität: 14.09.2012 DE 102012018198
(43) Veröffentlichungstag der Anmeldung: 19.03.2014
(73) Patentinhaber: MAN Truck & Bus AG, 80995 München (DE)
(72) Erfinder: Wackerl, Martin, 85256 Vierkirchen (DE); Miksch, Walter, 85256 Vierkirchen (DE); Kirchner, Stefan, 81669 München (DE)
(74) Vertreter: Liebl, Thomas

(56) Entgegenhaltungen:
- EP-A2- 1 930 193
- FR-A- 1 321 824
- JP-A- S60 203 521

## Beschreibung

Die vorliegende Erfindung betrifft ein luftführendes Gehäuse für eine Heizungs- und/oder Klimaanlage, insbesondere für Fahrzeuge, gemäß dem Oberbegriff des Patentanspruchs 1. Ferner betrifft die Erfindung ein Verfahren zum Betreiben einer Heizungs- und/oder Klimaanlage, insbesondere für Kraftfahrzeuge, mit einem luftführenden Gehäuse nach dem Oberbegriff des Anspruchs 10. Ein luftführendes Gehäuse einer Fahrzeugklimaanlage gemäß Oberbegriff des Anspruchs 1 bzw. 10 ist aus dem Dokument JP S60 203521 bekannt. Heizungs- und/oder Klimaanlagen dienen zur Konditionierung der Luft in Innenräumen, wobei insbesondere bei Kraftfahrzeugen auch die Aufrechterhaltung klarer Sichtverhältnisse an den Scheiben wesentlich ist. Bei solchen Anlagen ist es auch bekannt, eine Umluftsteuerung vorzusehen, bei der meist kurzzeitig die Frischluft-Ansaugöffnung geschlossen und eine in den Innenraum mündende Kurzschlussöffnung aufgesteuert wird (schnellere Erwärmung des Innenraums, etc.). Bei derartigen Heizungs- und/oder Klimaanlagen kann gegebenenfalls durch Umwelteinflüsse, wie zum Beispiel Vereisung der Ansaugöffnung im Winter oder durch Fremdkörper (Blätter, etc.) in der Ansaugöffnung die Luftkonditionierung verschlechtert oder sogar ganz unterbrochen sein.
Aufgabe der Erfindung ist es daher, ein luftführendes Gehäuse für eine Heizungs- und/oder Klimaanlage sowie ein Verfahren zum Betreiben einer Heizungs- und/oder Klimaanlage mit einem luftführenden Gehäuse vorzuschlagen, bei dem mit einfachen Mitteln Störungen in der Frischluftzuführung entgegengewirkt werden kann.
Die Lösung dieser Aufgabe gelingt mit den Merkmalen der unabhängigen Patentansprüche. Vorteilhafte und besonders zweckmäßige Ausgestaltungen der Erfindung sind Gegenstand der Unteransprüche.
Gemäß Patentanspruch 1 wird ein luftführendes Gehäuse für eine Heizungs- und/oder Klimaanlage, insbesondere für eine Heizungs- und/oder Klimaanlage für Kraftfahrzeuge bzw. Nutzfahrzeuge, mit zumindest einer gehäuseseitigen Einlass- und/oder Ansaugöffnung für Luft vorgeschlagen, wobei die Einlass- und/oder Ansaugöffnung insbesondere als Frischluft-Ansaugöffnung ausgebildet ist. Erfindungsgemäß ist vorgesehen, dass in zumindest einer Wand des Gehäuses zumindest ein Ventilelement angeordnet ist, das so ausgebildet ist, dass es in einem definierten bzw. vorgegebenen Normalbetriebszustand (der selbstverständlich auch mehrere unterschiedliche Betriebszustände umfassen kann) eine, zusätzlich zur zumindest einen Einlass- und/oder Ansaugöffnung vorhandene Zusatzluftöffnung verschließt und bei definierten bzw. vorgegebenen, gegenüber dem Normalbetriebszustand veränderten Strömungs- und/oder Druckverhältnissen in dem Gehäuse, insbesondere bei definierten Unterdruckverhältnissen in dem Gehäuse, öffnet und die zugeordnete Zusatzluftöffnung freigibt, damit über diese Zusatzluft in das Gehäuse einströmen kann. Derartige die Leistung der Heizungs- und/oder Klimaanlage beeinträchtigende Strömungs- und/oder Druckverhältnisse, insbesondere ein Unterdruck im Gehäuse bei einer Gebläseansaugung, können sich ohne die erfindungsgemäße Lösung zum Beispiel dann einstellen, wenn sich der Ansaugquerschnitt der Einström- und/oder Ansaugöffnung vermindert, zum Beispiel durch Vereisung und/oder durch sich dort ansammelnde Fremdkörper.

Es versteht sich, dass die Heizungs- und/oder Klimaanlage bzw. das luftführende Gehäuse in an sich bekannter Weise mit einem Gebläse gekoppelt sein kann, das vorzugsweise in diese bzw. in dieses integriert ist.

Das Ventilelement selbst kann zum Beispiel durch eine Art Rückschlagventil gebildet sein, das unter geringer Vorspannkraft geschlossen ist und bei definierten Strömungs- und insbesondere Druckänderungen in dem Gehäuse, zum Beispiel aufgrund eines verminderten Ansaugquerschnitts, öffnet und die zugeordnete Zusatzluftöffnung freigibt. Die Zusatzluftöffnung kann dabei von der regulären Ansaugöffnung entfernt, zum Beispiel an einer Rückwand eines Gehäuses, so angeordnet sein, dass sie bevorzugt Frischluft als Zusatzluft zuführt. Durch dieses zumindest eine Ventilelement kann somit auf einfache Weise sichergestellt werden, dass nicht zum Beispiel durch Umwelteinflüsse wie Vereisung im Winter und/oder durch Fremdkörper (Blätter, etc.) die Luftkonditionierung verschlechtert oder gegebenenfalls sogar ganz unterbrochen ist.

Das Ventilelement kann grundsätzlich als mit einer Steuer- und/oder Regeleinrichtung, insbesondere mittels eines Steuergerätes, ansteuerbares Ventilelement ausgebildet sein, das, beispielsweise nach dem Erfassen von definierten Druckänderungen mit einer geeigneten Sensoreinrichtung, aufgesteuert wird, um die jeweils zugeordnete Zusatzluftöffnung freizugeben. In Verbindung mit mehreren Ventilelementen und mehreren Zusatzluftöffnungen kann in einem solchen Fall gegebenenfalls auch nur ein Teil der Ventilelemente aufgesteuert werden. Ein derartiger Aufbau ist jedoch relativ aufwendig. Besonders bevorzugt ist daher eine Ausgestaltung, bei der das Ventilelement bei definierten bzw. vorgegebenen, gegenüber dem Normalbetriebszustand veränderten Strömungs- und/oder Druckverhältnissen in dem Gehäuse, zum Beispiel bei einem definierten Unterdruck in dem Gehäuse, selbsttätig öffnet. In diesem Zusammenhang ist gemäß einer besonders bevorzugten konkreten Ausgestaltung vorgesehen, dass das Ventilelement durch ein besonders montage- und kostengünstiges, wenigstens bereichsweise gummielastisch ausgebildetes Abdeck- und/oder Schirmventil gebildet ist, das ein die zugeordnete Zusatzluftöffnung im Normalbetriebszustand ab- und/oder überdeckendes, vorzugsweise schirmartig ab- und/oder überdeckendes, und bei den definiert vorgegebenen, gegenüber dem Normalbetriebszustand veränderten Strömungs- und/oder Druckverhältnissen freigebendes Abdeck- und/oder Schirmelement aufweist. Ein derartiges Abdeck- und/oder Schirmelement ist bevorzugt durch eine Dichtkappe bzw. -lippe gebildet.

Besonders bevorzugt ist eine konkrete Ausgestaltung gemäß der das Ventilelement in einer zusatzluftöffnungsseitige Aufnahme, insbesondere in einer zentrischen Aufnahme bzw. Bohrung der zugeordneten Zusatzluftöffnung, angeordnet und/oder eingesetzt ist, zum Beispiel mittels einer Clipverbindung eingeclipst ist. Insbesondere in Verbindung mit einer derartigen Ausgestaltung, aber nicht ausschließlich mit einer derartigen Ausgestaltung, ist es vorteilhaft, wenn die Zusatzluftöffnung durch mehrere, um die zentrische Bohrung herum angeordnete, voneinander beabstandete Durchbrüche gebildet ist, die von dem vorzugsweise umlaufenden Abdeck- und/oder Schirmelement, insbesondere einer Dichtkappe bzw. einer Dichtlippe, das zum Beispiel einen Kopf des Abdeck- und/oder Schirmventils ausbildet, im geschlossenem Zustand überdeckt sind. Grundsätzlich kann die Zusatzluftöffnung aber auch nur durch einen einzigen Durchbruch gebildet sein, der dann zum Beispiel lediglich bereichsweise um die zentrische Aufnahme umläuft.

Grundsätzlich kann es ausreichend sein, dass ein einziges Ventilelement vorgesehen ist. Besonders bevorzugt ist jedoch eine Ausgestaltung, bei der in der Wand des Gehäuses mehrere voneinander beabstandete, jeweils eine oder mehrere zugeordnete Zusatzöffnungen abdeckende Ventilelemente vorgesehen sind, da dadurch ausreichend große Querschnitte bereitgestellt werden können, die sich bei Bedarf automatisch zuschalten. Erfindungsgemäß ist das zumindest eine Ventilelement in einem der Einlass- und/oder Ansaugöffnung, insbesondere einer Frischluft-Ansaugöffnung, gegenüberliegenden Wandabschnitt des Gehäuses angeordnet. Damit wird bewirkt, dass die regulär einströmende Luft bzw. Frischluft mehr oder weniger direkt auf das Ventilelement auftrifft dergestalt, dass die einströmende Luft das Ventilelement, zumindest unterstützend, in Richtung dessen Geschlossenstellung beaufschlagt und/oder vorspannt, bevorzugt dieses zuhält. Damit kann auch der durch die einströmende Luft auftretende Staudruck in die konstruktive Auslegung des Ventilelementes mit einbezogen sein bzw. dieses gezielt geschlossen halten. Daraus resultiert gegebenenfalls auch eine verbesserte Abstimmung des Ansprechverhaltens des Ventilelementes aufgrund größerer, nicht nur durch die Gebläseleistung bewirkter Druckunterschiede.
Bei einem Kraftfahrzeug kann besonders bevorzugt die Einlass- und/oder Ansaugöffnung, insbesondere eine Frischluft-Ansaugöffnung, derart positioniert sein, dass sie mittelbar oder unmittelbar dem Fahrtwind ausgesetzt ist. Damit kann somit konkret der durch den Fahrtwind regulär auftretende Staudruck in die konstruktive Auslegung des Ventilelementes einbezogen sein bzw. dieses gezielt geschlossen halten.
Schließlich kann, zum Beispiel bei einem Nutzfahrzeug, das Gehäuse durch ein Luftfiltergehäuse mit wenigstens einem entsprechend integrierten Ventilelement gebildet sein, dessen Frischluft-Ansaugöffnung hinter einer entsprechend ausgebildeten Frontschürze mit Kühlergrill positioniert ist.
Die sich mit der erfindungsgemäßen Verfahrensführung ergebenden Vorteile wurden bereits zuvor ausführlich beschrieben, so dass zur Vermeidung von Wiederholungen auf die zuvor gemachten Ausführungen verwiesen wird.

Ein Ausführungsbeispiel der Erfindung ist anhand der beigefügten, skizzenhaften Zeichnung näher erläutert.

Es zeigen:
- Fig. 1: einen Schnitt durch ein, einer Klimaanlage für ein Kraftfahrzeug vorgeschaltetes Luftfiltergehäuse mit einem integrierten Gebläse, einer Frischluft-Ansaugöffnung und mit an der Rückwand des Gehäuses angeordneten Schirmventilen zur Zuführung von Zusatzluft;
- Fig. 2: das Gehäuse nach Fig. 1 bei geöffneten Schirmventilen und Zuführung von zusätzlicher Frischluft; und
- Fig. 3: in vergrößerter Darstellung die Zusatzluftöffnungen mit teils montierten Schirmventilen.

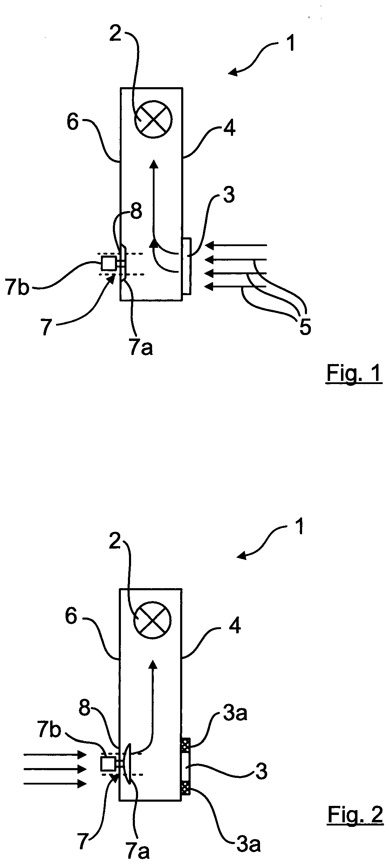

In der Fig. 1 der skizzenhaften Zeichnung ist das Luftfilter-Gehäuse 1 für eine Klimaanlage eines Kraftfahrzeugs dargestellt, das hinter einer Frontschürze (nicht dargestellt) angeordnet ist. In das Gehäuse 1 ist ein elektrisch angetriebenes Gebläse 2 integriert. Das Gebläse 2 kann aber auch an einer anderen Stelle in den nicht dargestellten Luftführungen und Luftkonditionierungseinrichtungen zum Innenraum des Kraftfahrzeugs vorgesehen sein.

In dem Gehäuse 1 ist eine Frischluft-Ansaugöffnung 3 vorgesehen, über die die Frischluft in das Gehäuse 1 mit dem integrierten Luftfilter (nicht dargestellt) einleitbar ist.
Die Frischluft-Ansaugöffnung 3 ist bevorzugt an der Vorderwand 4 des Gehäuses 1 hinter einem Kühlergrill der Frontschürze angeordnet und dementsprechend im Fahrbetrieb dem Fahrtwind (Pfeile 5) ausgesetzt.

An der Rückwand 6 des Gehäuses 1 sind mehrere Schirmventile 7 vorgesehen, die diesen zugeordnete Zusatzluftöffnungen 8 in der Gehäuserückwand 6 abdecken. Die Schirmventile 7 liegen dabei der Ansaugöffnung 3 gegenüber, sind also dem Staudruck des Fahrtwinds bzw. der Frischluftströmung auch bei Gebläsebetrieb (vgl. Fig. 2) ausgesetzt.

Die Schirmventile 7 aus einem gummielastischen Material, zum Beispiel aus einem Elastomer, weisen hier durchmessergrößere Köpfe 7a mit umlaufenden Dichtlippen als Dichtkappen sowie an die Köpfe 7a angeformte, zentrische Zapfen 7b auf.

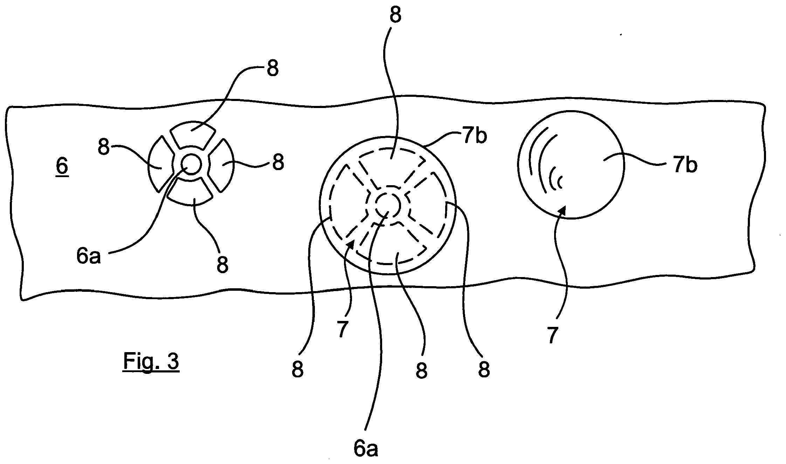

In der Rückwand 6 sind dazu je Ventil 7 (Fig. 3) zentrische Ausnehmungen bzw. Bohrungen 6a und um diese herum hier lediglich beispielhaft vier, die Zusatzluftöffnungen 8 bildende Durchbrüche vorgesehen.

In die zentrischen Ausnehmungen 6a der Rückwand 6 können die entsprechend ausgebildeten Zapfen 7b der Ventile 7 montagegünstig eingeclipst werden, wobei die Köpfe 7a der Ventile 7 an der Rückwand 6 anliegen und die Durchbrüche 8 mit vorgegebener Vorspannkraft überdecken.

Die Fig. 1 zeigt den Fahrbetrieb des Kraftfahrzeugs mit eingeschaltetem oder gegebenenfalls nicht eingeschaltetem Gebläse 2 und mit freier Frischluft-Ansaugöffnung 3, deren Querschnitt nicht vermindert ist. Hier sind aufgrund der regulären Druckverhältnisse und gegebenenfalls des Staudrucks 5 die Ventile 7 geschlossen; die Frischluftansaugung erfolgt ausschließlich über die Ansaugöffnung 3.
Die Fig. 2 stellt beispielhaft einen irregulären Zustand mit gegenüber dem Normalbetriebszustand veränderten Strömungs- und/oder Druckverhältnissen dar, bei dem die Frischluft-Ansaugöffnung 3 durch zum Beispiel eine Vereisung 3a und/oder analog dazu Fremdkörper mehr oder minder verschlossen ist. Hier öffnen durch die ins Negative veränderten Druckverhältnisse im Gehäuse 1 und den fehlenden Staudruck (Pfeile 5) des Fahrtwinds die Ventile 7 selbsttätig und es kann Zusatz-Frischluft, zum Beispiel aus der Umgebung, in die Klimaanlage bzw. in das Gehäuse 1 einströmen.

Die Erfindung ist nicht auf das dargestellte Ausführungsbeispiel beschränkt.

Anstelle der Schirmventile 7 können gegebenenfalls auch andere Ventilbauarten mit der beschriebenen Wirkung verwendet sein. Die Ventilelemente 7 mit Zusatzluftöffnungen 8 können gegebenenfalls auch bei einer ausschließlichen Heizungsanlage eingesetzt sein.

Das Gehäuse 1 kann gegebenenfalls auch unmittelbar das Gehäuse der Heizungs- und/oder Klimaanlage mit integriertem Gebläse 2 und den üblichen, stromab liegenden Luftkonditionierungseinrichtungen sein.

### Bezugszeichenliste

- 1: Gehäuse
- 2: Gebläse
- 3: Frischluft-Ansaugöffnung
- 3a: Vereisung
- 4: Vorderwand
- 5: Pfeile Fahrtwind
- 6: Rückwand
- 6a: zentrische Ausnehmungen
- 7: Schirmventile
- 7a: Köpfe
- 7b: Zapfen
- 8: Zusatzluftöffnungen

## Patentansprüche

1. Luftführendes Gehäuse für eine Heizungs- und/oder Klimaanlage, insbesondere für eine Heizungs- und/oder Klimaanlage für Fahrzeuge, mit zumindest einer gehäuseseitigen Einlass- und/oder Ansaugöffnung für Luft, wobei in zumindest einer Wand (6) des Gehäuses (1) zumindest ein Ventilelement (7) angeordnet ist, das so ausgebildet ist, dass es in einem definierten Normalbetriebszustand eine, zusätzlich zur zumindest einen Einlass- und/oder Ansaugöffnung (3) vorhandene Zusatzluftöffnung (8) verschließt und bei definierten, gegenüber dem Normalbetriebszustand veränderten Strömungs- und/oder Druckverhältnissen in dem Gehäuse (1) öffnet und die zugeordnete Zusatzluftöffnung (8) freigibt, **dadurch gekennzeichnet, dass** das zumindest eine Ventilelement (7) in einem der Einlass- und/oder Ansaugöffnung (3) gegenüberliegenden Wandbereich (6) des Gehäuses angeordnet ist dergestalt, dass die einströmende Luft auf das Ventilelement (7) trifft und dieses, zumindest unterstützend, in Richtung von dessen Geschlossenstellung beaufschlagt und/oder vorspannt.

2. Gehäuse nach Anspruch 1, **dadurch gekennzeichnet, dass** das Ventilelement (7) so ausgebildet ist, dass es bei den definierten, gegenüber dem Normalbetriebszustand veränderten Strömungs- und/oder Druckverhältnissen in dem Gehäuse (1) selbsttätig öffnet

3. Gehäuse nach Anspruch 2, **dadurch gekennzeichnet, dass** das Ventilelement (7) ein wenigstens bereichsweise gummielastisch ausgebildetes Abdeck- und/oder Schirmventil (7) ist, das ein, die zugeordnete Zusatzluftöffnung (8) im Normalbetriebszustand ab- und/oder überdeckendes, vorzugsweise schirmartig ab- und/oder überdeckendes, und die zugeordnete Zusatzluftöffnung (8) bei den definierten, gegenüber dem Normalbetriebszustand veränderten Strömungs- und/oder Druckverhältnissen freigebendes Abdeck- und/oder Schirmelement, insbesondere eine Dichtkappe (7a) oder Dichtlippe als Schirmelement, aufweist.

4. Gehäuse nach einem der vorhergehenden Ansprüche, **dadurch gekennzeichnet, dass** das Ventilelement (7) in einer zusatzluftöffnungsseitige Aufnahme (6a), insbesondere in eine zentrische Aufnahme oder Bohrung der zugeordneten Zusatzluftöffnung (8), angeordnet und/oder eingesetzt, insbesondere eingeclipst, ist.

5. Gehäuse nach Anspruch 3 und 4, **dadurch gekennzeichnet, dass** die Zusatzluftöffnung (8) durch einen Durchbruch oder durch mehrere, um die zusatzluftöffnungsseitige Aufnahme (6a) für das Ventilelement (7) herum angeordnete, voneinander beabstandete Durchbrüche gebildet ist, der oder die von dem Abdeck- und/oder Schirmelement, insbesondere einer Dichtkappe (7a) oder Dichtlippe als Abdeck- und/oder Schirmelement, des Abdeck- und/oder Schirmventils (7) im geschlossenem Zustand überdeckt ist oder sind.

6. Gehäuse nach einem der vorhergehenden Ansprüche, **dadurch gekennzeichnet, dass** in der Wand (6) des Gehäuses (1) mehrere voneinander beabstandete, jeweils eine oder mehrere zugeordnete Zusatzöffnungen (8) abdeckende Ventilelemente (7) vorgesehen sind.

7. Gehäuse nach einem der vorhergehenden Ansprüche, **dadurch gekennzeichnet, dass** das Gehäuse (1) ein den Luftkonditionierungseinheiten strömungstechnisch vorgeschaltetes Luftfiltergehäuse (1) ist.

8. Fahrzeug, insbesondere Nutzfahrzeug, mit einem luftführenden Gehäuse (1) nach einem der vorhergehenden Ansprüche.

9. Fahrzeug nach Anspruch 8, **dadurch gekennzeichnet, dass** die Einlass- und/oder Ansaugöffnung derart positioniert ist, dass sie mittelbar oder unmittelbar dem Fahrtwind (5) ausgesetzt ist.

10. Verfahren zum Betreiben einer Heizungs- und/oder Klimaanlage, insbesondere für Kraftfahrzeuge, mit einem luftführenden Gehäuse, wobei in zumindest einer Wand (6) des Gehäuses (1) zumindest ein Ventilelement (7) angeordnet ist, das so ausgebildet ist, dass es im definierten Normalbetriebszustand eine zusätzlich zur zumindest einen Einlass- und/oder Ansaugöffnung (3) vorhandene Zusatzluftöffnung (8) verschließt und bei definierten, gegenüber dem Normalbetriebszustand veränderten Strömungs- und/oder Druckverhältnissen in dem Gehäuse (1) öffnet und die zugeordnete Zusatzluftöffnung (8) freigibt, **dadurch gekennzeichnet, dass** das zumindest eine Ventilelement (7) in einem der Einlass- und/oder Ansaugöffnung (3) gegenüberliegenden Wandbereich (6) des Gehäuses angeordnet ist dergestalt, dass die einströmende Luft auf das Ventilelement (7) trifft und dieses, zumindest unterstützend, in Richtung von dessen Geschlossenstellung beaufschlagt und/oder vorspannt.

## Claims

1. Air-conducting housing for a heating and/or air conditioning system, in particular for a heating and/or air conditioning system for vehicles, with at least one air inlet and/or intake opening on the housing side, wherein at least one valve element (7) is arranged in at least one wall (6) of the housing (1) and is formed such that in a defined normal operating state it closes an additional air opening (8) present in addition to the at least one inlet and/or intake opening (3), and under defined conditions of flow and/or pressure in the housing (1) which differ from the normal operating state it opens and clears the associated additional air opening (8), **characterized in that** the at least one valve element (7) is arranged in a wall region (6) of the housing opposite the inlet and/or intake opening (3) such that the inflowing air hits the valve element (7) and impacts and/or pretensions this at least by way of support in the direction of its closed position.

2. Housing according to Claim 1, **characterized in that** the valve element (7) is formed such that it opens automatically under defined conditions of flow and/or pressure in the housing (1) which differ from the normal operating state.

3. Housing according to Claim 2, **characterized in that** the valve element (7) is a cover and/or screening valve (7) which is formed rubber-elastic at least in regions and comprises a cover and/or screening element, in particular a sealing cap (7a) or a sealing lip as a screening element, which in the normal operating state covers the associated additional air opening (8), preferably in the manner of a screen, and which under the defined conditions of flow and/or pressure which differ from the normal operating state, clears the associated additional air opening (8).

4. Housing according to any of the preceding claims, **characterized in that** the valve element (7) is arranged and/or inserted, in particular clipped, in a recess (6a) on the additional air opening side, in particular in a central recess or bore of the associated additional air opening (8).

5. Housing according to Claim 3 and 4, **characterized in that** the additional air opening (8) is formed by a passage or by several passages which are spaced apart and arranged around the recess (6a) on the additional air opening side for the valve element (7), which passage or passages is or are covered in the closed state by the cover and/or screening element, in particular a sealing cap (7a) or sealing lip as a cover and/or screening element, of the cover and/or screening valve (7).

6. Housing according to any of the preceding claims, **characterized in that** several valve elements (7) spaced apart are provided in the wall (6) of the housing (1) and each cover one or more associated additional openings (8).

7. Housing according to any of the preceding claims, **characterized in that** the housing (1) is an air filter housing (1) connected flow-dynamically upstream of the air conditioning units.

8. Vehicle, in particular utility vehicle, with an air-conducting housing (1) according to any of the preceding claims.

9. Vehicle according to Claim 8, **characterized in that** the inlet and/or intake opening is positioned such that it is exposed directly or indirectly to the head wind (5).

10. Method for operating a heating and/or air conditioning system, in particular for motor vehicles, with an air-conducting housing, wherein at least one valve element (7) is arranged in at least one wall (6) of the housing (1) and is formed such that in a defined normal operating state it closes an additional air opening (8) present in addition to the at least one inlet and/or intake opening (3), and under defined conditions of flow and/or pressure in the housing (1) which differ from the normal operating state it opens and clears the associated additional air opening (8), **characterized in that** the at least one valve element (7) is arranged in a wall region (6) of the housing opposite the inlet and/or intake opening (3) such that the inflowing air hits the valve element (7) and impacts and/or pretensions this at least by way of support in the direction of its closed position.

## Revendications

1. Boîtier de guidage d'air pour une installation de chauffage et/ou de climatisation, en particulier pour une installation de chauffage et/ou de climatisation pour véhicules, comprenant au moins une ouverture d'entrée et/ou d'aspiration d'air du côté du boîtier, au moins un élément de soupape (7) étant disposé dans au moins une paroi (6) du boîtier (1), lequel est réalisé de telle sorte que dans un état de fonctionnement normal défini, il ferme une ouverture d'air d'appoint (8) prévue en plus d'au moins une ouverture d'entrée et/ou d'aspiration (3), et que dans des conditions d'écoulement et/ou de pression définies, modifiées par rapport à l'état de fonctionnement normal, dans le boîtier (1), il s'ouvre et libère l'ouverture d'air d'appoint associée (8), **caractérisé en ce que** l'au moins un élément de soupape (7) est disposé dans une région de paroi (6) du boîtier opposée à l'ouverture d'entrée et/ou d'aspiration (3) de telle sorte que l'air entrant arrive sur l'élément de soupape (7) et sollicite et/ou précontraigne celui-ci, au moins en le supportant, dans la direction de sa position fermée.

2. Boîtier selon la revendication 1, **caractérisé en ce que** l'élément de soupape (7) est réalisé de telle sorte que dans les conditions d'écoulement et/ou de pression définies, modifiées par rapport à l'état de fonctionnement normal, dans le boîtier (1), il s'ouvre automatiquement.

3. Boîtier selon la revendication 2, **caractérisé en ce que** l'élément de soupape (7) est une soupape de recouvrement et/ou de protection (7) réalisée au moins en partie avec l'élasticité du caoutchouc, qui présente un élément de recouvrement et/ou de protection, en particulier un capuchon d'étanchéité (7a) ou une lèvre d'étanchéité en tant qu'élément de protection, couvrant ou recouvrant l'ouverture d'air d'appoint associée (8) dans l'état de fonctionnement normal, de préférence la couvrant ou la recouvrant en forme de parapluie, et libérant l'ouverture d'air d'appoint associée (8) dans les conditions d'écoulement et/ou de pression définies, modifiées par rapport à l'état de fonctionnement normal.

4. Boîtier selon l'une quelconque des revendications précédentes, **caractérisé en ce que** l'élément de soupape (7) est disposé et/ou inséré, en particulier encliqueté, dans un logement du côté de l'ouverture d'air d'appoint (6a), en particulier dans un logement ou un alésage central de l'ouverture d'air d'appoint associée (8).

5. Boîtier selon les revendications 3 et 4, **caractérisé en ce que** l'ouverture d'air d'appoint (8) est formée par un orifice ou par plusieurs orifices espacés les uns des autres, disposés autour du logement du côté de l'ouverture d'air d'appoint (6a) pour l'élément de soupape (7), qui est/sont recouverts par l'élément de recouvrement et/ou de protection, en particulier par un capuchon d'étanchéité (7a) ou une lèvre d'étanchéité en tant qu'élément de recouvrement et/ou de protection de la soupape de recouvrement et/ou de protection (7) dans l'état fermé.

6. Boîtier selon l'une quelconque des revendications précédentes, **caractérisé en ce que** plusieurs éléments de soupape (7) espacés les uns des autres, recouvrant à chaque fois une ou plusieurs ouvertures d'appoint associées (8) sont prévus dans la paroi (6) du boîtier (1).

7. Boîtier selon l'une quelconque des revendications précédentes, **caractérisé en ce que** le boîtier (1) est un boîtier de filtre à air (1) monté, suivant une technique d'écoulement, en amont des unités de conditionnement d'air.

8. Véhicule, en particulier véhicule utilitaire, comprenant un boîtier de guidage d'air (1) selon l'une quelconque des revendications précédentes.

9. Véhicule selon la revendication 8, **caractérisé en ce que** l'ouverture d'entrée et/ou d'aspiration est positionnée de telle sorte qu'elle soit exposée directement ou indirectement au vent relatif (5).

10. Procédé pour faire fonctionner une installation de chauffage et/ou de climatisation, en particulier pour véhicules automobiles, comprenant un boîtier de guidage d'air, au moins un élément de soupape (7) étant disposé dans au moins une paroi (6) du boîtier (1), lequel est réalisé de telle sorte que dans l'état de fonctionnement normal défini, il ferme une ouverture d'air d'appoint (8) prévue en plus d'au moins une ouverture d'entrée et/ou d'aspiration (3), et dans des conditions d'écoulement et/ou de pression définies, modifiées par rapport à l'état de fonctionnement normal, dans le boîtier (1), il s'ouvre et libère l'ouverture d'air d'appoint associée (8), **caractérisé en ce que** l'au moins un élément de soupape (7) est disposé dans une région de paroi (6) du boîtier opposée à l'ouverture d'entrée et/ou d'aspiration (3) de telle sorte que l'air entrant arrive sur l'élément de soupape (7) et sollicite et/ou précontraigne celui-ci, au moins en le supportant, dans la direction de sa position fermée.
